Europäisches Patentamt

European Patent Office

Office européen des brevets

(11) Veröffentlichungsnummer: **0 429 744 A2**

# (12) EUROPÄISCHE PATENTANMELDUNG

(21) Anmeldenummer: 90105953.5

(22) Anmeldetag: 28.03.90

(51) Int. Cl.⁵: **C05F 17/02, C05F 17/00**

(30) Priorität: 22.11.89 CH 4186/89

(43) Veröffentlichungstag der Anmeldung:
05.06.91 Patentblatt 91/23

(84) Benannte Vertragsstaaten:
**AT BE CH DE DK ES FR GB GR IT LI LU NL SE**
Patentblatt 1

(71) Anmelder: **MULTISEC ENERGIETECHNIK**
**Blümlisalpstrasse 7**
**CH-3074 Muri bei Bern(CH)**

(72) Erfinder: **Hunziker, Erwin, sen.**
**Sigensee**
**CH-9542 Münchwilen(CH)**
Erfinder: **Wenger, Roland**
**Blümlialpstrasse 7**
**CH-3074 Muri(CH)**

(74) Vertreter: **Klunker . Schmitt-Nilson . Hirsch**
**Winzererstrasse 106**
**W-8000 München 40(DE)**

(54) **Verfahren zur Herstellung pasteurisierten Substrates und Anlage zur Durchführung des Verfahrens.**

(57) Verfahren zur Herstellung pasteurisierten Substrates durch biologische Verrottung organischer Abfälle, bei dem diese in einen Aufnahmebehälter gegeben, in demselben unter ständiger Umrührung während einer Verweilzeit innig mit Luft vermischt, dadurch einer bakteriellen aeroben Zersetzung zugeführt werden und das Endprodukt einer Veredelung unterzogen wird.

Erfindungsgemäss kennzeichnet sich das Verfahren durch die folgenden Behandlungsschritte

a) Nach Füllen des Aufnahmebehälters (1) mit einem Gemisch zu verrottender Abfälle fester Konsistenz bis zur Hälfte seines Fassungsvermögens und anschliessender Zugabe flüssiger Substanzen unter gleichzeitiger, natürlicher Luftzuführung durch dauerndes Umrühren des Abfallgemisches Fortführung der Umrührung während einer ersten Verweilzeit von 2 bis 3 Stunden,

b) Zudosieren dekantierten Klärschlammes mit einer derjenigen des Abfallgemisches entsprechenden Temperatur und höchstens mit einem Gewicht, das ein Drittels desjenigen des Abfallgemisches nicht übersteigt, unter Beigabe von Weis- skalk je nach Säuregehalt des letzteren im Umfange ca. von 4% des Klärschlammgewichtes und Fortsetzung der Umrührung während einer weiteren Verweilzeit von 69 bis 70 Stunden.

Eine Anlage zur Durchführung des Verfahrens mit einem Aufnahmebehälter für das zu verrottende Abfallgemisch samt Zu- und Abführvorrichtungen und mit Förderschnecken zum Umrühren des Abfallgemisches, ist dadurch gekennzeichnet, dass ein im Grundriss viereckiger Aufnahmebehälter (1) vorgesehen ist, der im Aufriss die Form eines mit seinem Dachfirst in den Erdboden gesenkten Hauses fünfeckigen Profils mit im Vergleich zu seiner Baulänge (l) grosser Breitenausdehnung (b) aufweist, wobei der Behälterboden aus zwei gleichen, stumpfwinklig gegeneinander geneigten, Bodenhälften (1.1, 1.2) mit den Konturen der Förderschnecken (2) entsprechend geformter Oberfläche ausgebildet ist, und dass mindestens je eine Förderschnecke (2) jeweils in Nähe der einen der beiden geneigten Bodenhälften (1.1, 1.2), parallel zu derselben verlaufend, angeordnet ist.

EP 0 429 744 A2

EP 0 429 744 A2

Schnitt I – I

FIG. 1

2

# VERFAHREN ZUR HERSTELLUNG PASTEURISIERTEN SUBSTRATES UND ANLAGE ZUR DURCHFÜHRUNG DES VERFAHRENS

Die Erfindung betrifft ein Verfahren zur Herstellung pasteurisierten Substrates gemäss dem Obergriff des Patentanspruches 1.

Bei einem bekannten, gattungsgemässen Verfahren wird Abfallmaterial nach dessen üblicherweise durch Sieb-, Trenn- und Zerkleinerungsvorgänge erfolgter Vorbereitung einem kreisrunden Gärbehälter mit einer kreisförmigen Verteilbewegung an dessen Umfang zugeführt und zum Zwecke der Einleitung und der Aufrechterhaltung eines aeroben biologischen Zersetzungsprozesses unter ständiger Umrührung allmählich gegen die zentrale Austrittsöffnung des Gärbehälters verschoben. Das Umrühren vollzieht sich in Form einer Anzahl miteinander verketteter, schraubenartig verlaufender Teilbewegungen in einer vorbestimmten Umlaufrichtung. Durch dieses Vorgehen sollen sogenannte Kurzschlussströme im Abfallmaterial verhindert werden, mit denen Teile des zu behandelnden Abfalls innert einer Zeit zur Austrittsöffnung gelangen können, die kürzer als die für die vollständige biologische Zersetzung bzw. Umbau des Abfallmaterials erforderliche Verweilzeit ist. Damit wird die Vermeidung einer Vermischung des fertigfermentierten Endproduktes mit unverrottetem Abfall angestrebt.

Dem Vorschlag, betreffend das in Rede stehende Verfahren, ist keine genaue Angabe über die Gesamtprozessdauer entnehmbar. Aufgrund einschlägiger Betrachtungen in der entsprechenden Druckschrift erscheint eine Verweilzeit des zu behandelnden Abfalls im Gärbehälter von vielleicht 4 bis 6 Tagen als sehr wahrscheinlich. Ferner lässt sich die Offenbarung dieses Vorschlages auch keine Feststellung dahingehend zu, ob ein periodischer Verfahrensablauf vorliegt, in dem jeweils eine bestimmte Abfallmenge in den Gärbehälter eingefüllt und anschliessend fertig fermentiert wird, oder ob es sich hierbei um einen dauernd gespeisten, kontinuierlich ablaufenden Verrottungsvorgang handelt.

Schliesslich vermittelt der betrachtete Vorschlag auch keine Lehre bezüglich der Zusammensetzung des zu verrottenden Abfallmaterials: ob und wieweit sich mittels dieser Methode die Abfallarten Landwirtschaftsabfälle, Klärschlamm, Jauche usw. verarbeiten lassen. Einzig wird Stadtmüll als zu behandelndes Abfallrohmaterial erwähnt. Es bleibt dabei ferner auch die Frage der Entkeimung des Endproduktes offen.

Offenbarungsgemäss besteht das fragliche Verfahren lediglich in einer intensiven Belüftung des Abfallmaterials durch ständiges Umrühren desselben, während es in einer nicht genau angegebenen Verweilzeit vom Eintritt des Gärbehälters zu dessen Austritt transportiert wird.

Aufgabe der vorliegenden Erfindung ist es, ein Verfahren einleitend geschilderter Art anzugeben, das unter Vermeidung besagter Nachteile der bekannten Fermentiermethode die biologische Umwandlung organischen Abfallmaterials in ein pasteurisiertes Substrat innert der kürzestmöglichen Verweilzeit gestattet.

Die Lösung der Aufgabe besteht erfindungsgemäss im Verfahren, das die im Patentanspruch 1 gekennzeichneten Behandlungsschritte umfasst.

Massnahmen zu einer besonders vorteilhaften, weiteren Ausgestaltung des Verfahrens gemäss der Erfindung sind den abhängigen Patentansprüchen 2 bis 10 entnehmbar.

Ein derartiges Vorgehen ermöglicht eine sich rasch vollziehende, mechanisierte und steuerbare Verrottung organischer Abfallmaterialien aller Art einschliesslich Klärschlamm,. Tierkadaver, Jauche usw. mit Entkeimung, also zu einem pasteurisierten Substrat, ohne Verwendung von Fremdwärme.

Die Erfindung hat ferner auch eine Anlage gemäß Anspruch 11 zum Gegenstand, mit einem Aufnahmebehälter für das zu verrottende Abfallgemisch samt Vorrichtungen zur Zuführung des letzeren und zur Abführung des fertigfermentierten Produktes sowie mit Förderschnecken zur Umrührung des Abfallgemisches. Die Anlage eignet sich insbesondere zur Durchführung des erfindungsgemäßen Verfahrens.

Es ist zur Realisierung des weiter oben beschriebenen, vorbekannten Verfahrens auch eine Zersetzungseinrichtung bekannt geworden. Diese weist eine Drehbrücke auf, die, den zugehörigen kreisrunden Gärbehälter längs eines Durchmessers desselben überspannend, an ihren beiden Enden mittels dort vorgesehener Rollen auf eine kreisförmige, auf der Behälteroberkante umlaufend befestigte Schienenbahn verfahrbar abgestützt ist. Die Drehbrücke ist mit Hilfe eines Elektroantriebes über ein auf eine der Rollen wirkendes Untersetzungsgetriebe antreibbar. Dabei wird sie auch von einem Zentrallager getragen, das an der kegelstumpfartigen Innenwand im Zentrum des Gärbehälterinnern angebracht ist. Weiteres setzt sich die Drehbrücke aus zwei sich jeweils ausgehend vom Zentrallager radial zum Behälterumfang hin erstreckenden Brückhälften zusammen. Die eine der letzteren trägt einen Schneckenförderer, der zum Zuführen des zu verrottenden Abfallmaterials an die Peripherie des Gärbehälters, sich von einem über dem Zentrallager angeordneten Aufnahmetrichter bis zu einer im Umfangsbereich befindlichen Auslaufrutsche erstreckend, angeordnet ist. Auf der anderen Brückenhälfte ist eine Vielzahl motorisch angetriebener Belüftungsschrauben in zwei parallen Reihen befestigt, welche letzteren radial zwischen der kegelstumpfartigen Innenwand und der zylindrischen Aussenwand des Gärbehälters verlaufen. Die Belüftungsschrauben sind mit ihren Spitzen von der Brücke abwärts gerichtet und dabei derart schräg geneigt, dass jede Schneckenspitze in Drehrichtung der Brücke nach vorne und zugleich in Richtung zur Behälteraussenwand hin weist. Zudem sind die Belüftungsschrauben in der einen Reihe inbezug auf diejenigen in der anderen Reihe in Radialrichtung verschoben. Die Schraubenfläche der Belüftungsschrauben hebt das Abfallmaterial vom Behälterboden an und fördert es unter ständigem Umrühren nach oben.

Der Füllstand des Gärbehälters ist in einer Höhe vorgesehen ist, die etwa 80 bis 85% derjenigen der Behälterwandung beträgt.

Die Drehbewegung der Brücke wird durch die im gleichen Drehsinn umlaufenden Belüftungsschrauben unterstützt, die ein inniges Durchmischen des Abfallmaterials über die gesamte Breite des Gärbehälters vollführen. Die Zufuhr der für den besagten Vorgang erforderlichen Luft erfolgt mittels eines Gebläses über eine Anzahl in der Aussenwandung in Bodennähe vorgesehener Oeffnungen und die diese mit dem Gebläse verbindenden Verteilrohre.

Es wird angenommen, dass sich das behandelte Abfallmaterial infolge der Schrägstellung der Belüftungsschrauben zugleich in einer ständigen, gleichförmigen Bewegung von der Aussenwand zum Austritt in der Innenwand verschiebt.

Die Umfangsgeschwindigkeit der einzelnen Belüftungsschrauben ist zur Erzielung einer geeigneten Zersetzung des Abfallmaterials einstellbar. Es sind auch Massnahmen zum Anhalten des Betriebes der Anlage für den Fall vorgesehen, dass eine Belüftungsschraube auf ein unerwartetes Hindernis stossen sollte.

Zur Erfassung des jeweiligen Zustandes des in Behandlung befindlichen Abfallmaterials wie Temperatur und Sauerstoffgehalt und zur Steuerung der Luftzufuhr dient eine Anzahl kraftbetätigt von unten in den Gärbehälter einfahrbarer Fühler.

Ein gewichtiges Nachteil der vorbeschriebenen Anlage ist ihr aufwendiger Aufbau verknüpft mit einem erheblichen Energiebedarf und zugleich mit zahlreichen Fehlermöglichkeiten.

Es stellte sich daher für die Erfindung die weitere Aufgabe auch eine gattungsgemässe Anlage insbesondere zur Durchführung des bereits weiter oben geschilderten Verfahrens zu schaffen. Diese soll unter Vermeidung besagter Nachteile eine technologisch wie wirtschaftlich zufriedenstellende Herstellung pasteurisierten Substrats ermöglichen.

Die Aufgabe wird erfindungsgemäss durch eine Anlage mit den Ausbildungsmerkmalen gemässen dem Kennzeichen des unabhängigen Patentanspruches 11 gelöst.

Merkmale einer besonders zweckdienlichen Weiterausbildung der Anlage sind Gegenstand der abhängigen Patentansprüche 12 bis 21.

Die Anlage gemäss der Erfindung weist im Vergleich zu der Bekannten eine bedeutend einfachere Beschaffenheit auf. Sie lässt daher eine erhöhte Betriebssicherheit und einen merklich geringeren Energieverbrauch erwarten.

Die Erfindung wird beispielsweise anhand einer bevorzugten Ausführungsform der Substratpasteurisieranlage gemäss der Zeichnung näher erläutert.

Es zeigen:

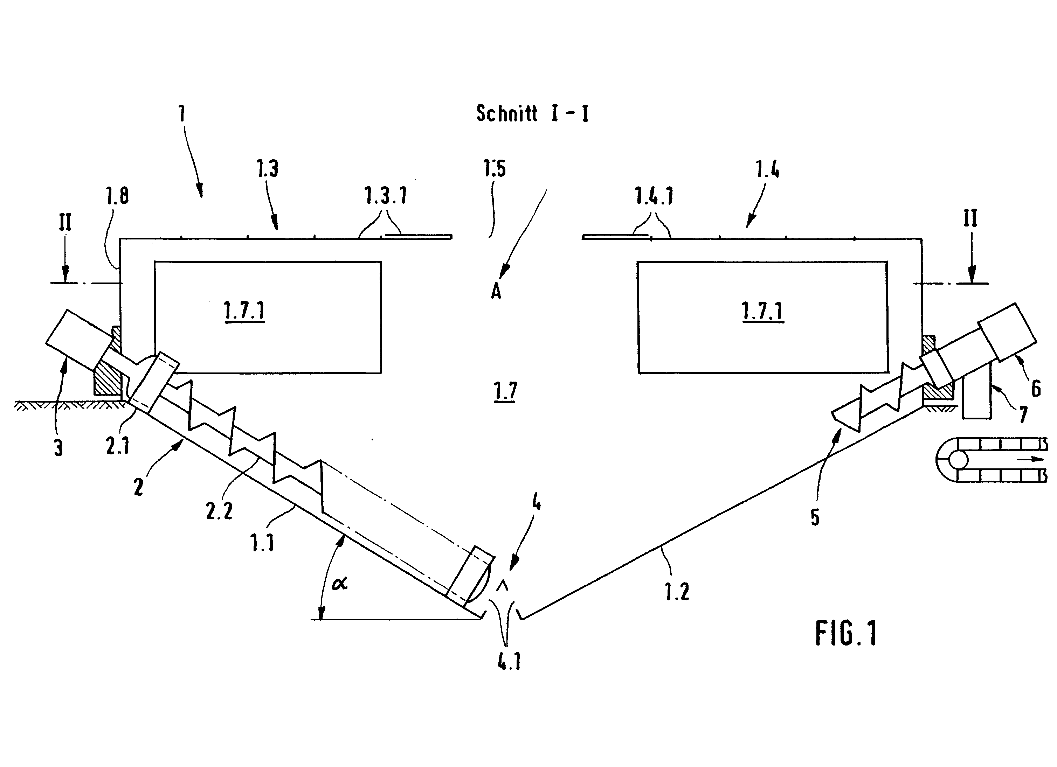

Figur 1 eine Anlage zur Herstellung entkeimten Substrats gemäss der Erfindung im Querschnitt längs einer in der Figur 2 angedeuteten Schnittebene I-I und

Figur 2 Draufsicht auf die Anlage nach der Figur 1, wobei deren oberer Teil entlang einer dort angegebenen Schnittebene II-II entfernt ist.

Die Anlage umfasst einen Aufnahmebehälter 1 für das zu verrottende Abfallgemisch, zwei darin angebrachte Paare von Förderschnecken 2 zur gleichzeitigen Umrührung und Belüftung des Abfallgemisches und zwei je einem der beiden Förderschneckenpaare zugeordnete Austragschnecken 5.

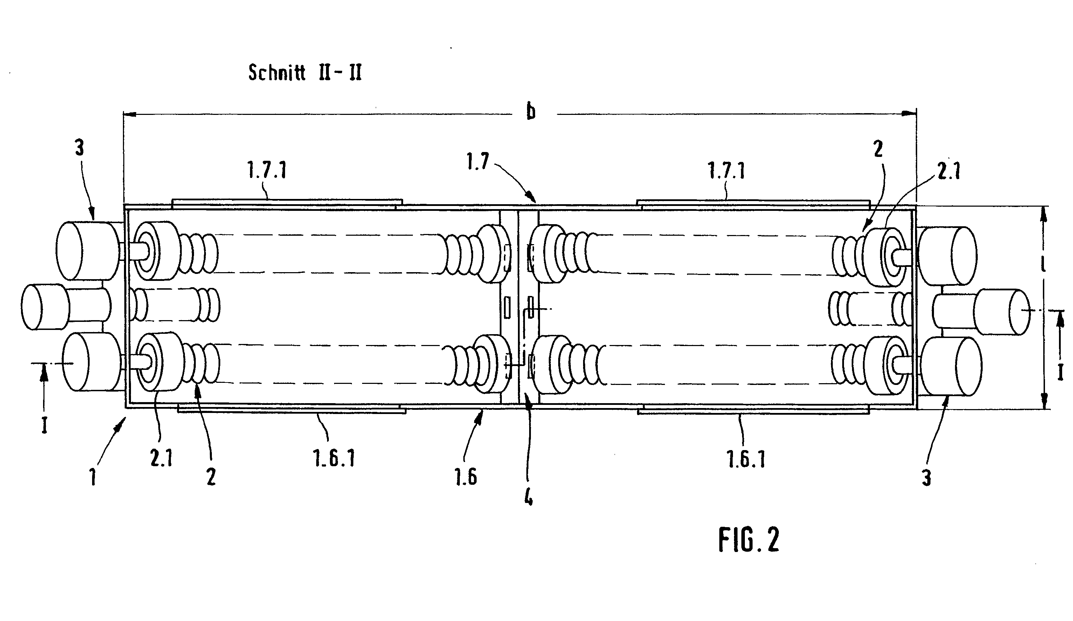

Während der Aufnahmebehälter in Obenansicht die Gestalt eines Viereckes aufweist, erscheint er in Vorderansicht in Form eines mit seinem Dachfist in den Erdboden gesenkten Hauses fünfeckigen Profils. Er hat, wie es sich insbesondere der Figur 2 entnehmen lässt, eine im Vergleich zu seiner Baulänge l grosse Breitenausdehnung b. Der Behälterboden besteht aus zwei gleichen Bodenhälften 1.1, 1.2 mit entsprechend den Umrissen der Förder- und Austragschnecken 2 und 5 ausgebildeter Oberfläche, die stumpfwinklig gegeneinander geneigt sind. Die Anordnung der vier Förderschnecken 2 ist derart getroffen, dass je ein Paar derselben jeweils in Nähe der einen der beiden geneigten Bodenhälften 1.1, 1.2 des Aufnahmebehälters 1, parallel zu derselben verlaufend, angeordnet ist. Der Steigungswinkel der beiden Bodenhälften 1.1, 1.2 gegen die Horizontale wird in vorteilhafter Weise zu 30 Grad gewählt. Zur Abdeckung des Aufnahmebehälters 1 ist ein Behälterdeckel viereckiger Gestalt vorgesehen, der ebenfalls aus zwei gleichartigen Deckelhälften 1.3, 1.4 gebildet wird. Die beiden Deckelhälften 1.3, 1.4 sind ihrerseits aus schwenkbar aneinander gelenkten, ebenen und rechteckigen Deckelementen 1.3.1, 1.4.1 zusammengesetzt. Dabei sind bei aufgesetztem Behälterdeckel die beiden innersten, einander benachbarten Deckelemente 1.3.1, 1.4.1 zur Freilegung einer Eintrittsöffnung 1.5 für das zu verrottende Abfallgemisch A in der Deckelmitte aufklappbar. Die Zufuhr des Abfallgemisches A oder seiner Komponenten zur Eintrittsöffnung 1.5 kann in an sich bekannter Weise, beispielsweise mittels eines Förderbandes, erfolgen.

Zum Ermöglichen von Wartungs- und Reinigungsarbeiten im Innern des Aufnahmebehälters 1 ordnet man mit Vorteil in dessen fünfeckförmigen beiden Wänden, nämlich in der Stirnwand 1.6 und der Rückwand 1.7, mindestens je eine Tür 1.6.1, 1.7.1 an.

Die Lagerung 2.1 der Förderschnecken 2 je an den zugeordneten Bodenhälften 1.1, 1.2 des Aufnahmebehälters 1 ist jeweils an den beiden Schneckenenden vorgesehen. Je ein jeweils mit dem oberen Schneckenende gekoppelter, reversierbarer Elektroantrieb 3 ist an der Aussenfläche jeweils derjenigen Schmalseite 1.8 oder 1.9 des Aufnahmebehälters 1 angeordnet, durch die das betreffende Schneckenende geführt ist.

Eine Baulänge von 4,5 Metern erwies sich für die Förderschnecken 2 als besonders zweckmässig. Für den als eine Hohlwelle ausgebildeten Schneckenkern 2.2 eignet sich ein Durchmesser von 60 bis 80 mm. Zur Erzielung einer besseren Durchmischung des behandelten Abfallgemisches mit der sich ungezwungen umwälzenden Luft sind sämtliche Förderschnecken 2 besonders zweckdienlich derart ausgebildet, dass deren Fördersinn auf den vom jeweiligen unteren Schneckenende gemessenen 85% ihrer Baulänge jeweils vom unteren zum oberen Schneckenende hin und auf den restlichen 15% ihrer Baulänge umgekehrt gerichtet ist. Zwischen den unteren Enden der beiden Paare von Förderschnecken 2 in der durch die geneigten beiden Bodenhälften 1.1, 1.2 des Aufnahmebehälters 1 gebildeten Ecke ist eine Scheidewand 4 dreieckförmigen Querschnittes vorgesehen. Ihre Höhe soll kleiner als der auf sie projizierte Schneckendurchmesser sein. Zudem weist die Scheidewand 4 eine Anzahl von Eintrittsöffnungen 4.1 auf, über die die für einen aeroben bakteriellen Umbau des Abfallgemsiches erforderliche Luft L durch den im Innern des Aufnahmebehälters 1 vorhandenen Unterdruck in dieses hereingesogen wird.

Die Entnahme des fertigfermentierten Substrats erfolgt an der jeweiligen Stossstelle der beiden Abschnitte einer jeden Förderschnecke 2 mit einander entgegengerichtetem Fördersinn, die ein gegenseitiges Längenverhältnis wie 85% der Schneckenbaulänge zu 15% derselben aufweisen. Hierzu ist je eine Austragschnecke 5 jeweils an einer der beiden geneigten Bodenhälten 1.1, 1.2 des Aufnahmebehälters 1, und zwar symmetrisch zwischen den dort angeordneten jeweils zwei Förderschnecken 2, vorgesehen. Das obere Ende der beiden Austragschnecken 5 durchdringt ebenfalls die jeweilige, dort befindliche Schmalseite 1.8 oder 1.9 des Aufnahmebehälters 1 und ist mit einem Elektroantrieb 6 gekoppelt. Entsprechend dem vom unteren zum oberen Schneckenende hin gerichteten Fördersinn der Austragschnecken 5 ist jeweils im Bereich von deren oberem Ende je ein Auslauf 7 derart angeordnet, dass eine Weiterbeförderung des Fertigproduktes, beispielsweise mittels eines Transportbandes, ermöglicht ist. Die Baulänge der Austragschnecken 5 erstreckt sich jeweils vom Auslauf 7 bis zur Höhe der Stossstelle der gegenläufigen Schneckengänge der Förderschnecken 2.

Die Steuereinheit, die die mit einer Drehzahl n gleich 6 bis 8 U./min. ablaufende Umrührbewegung der Förderschnecken 2 mit einer ersten Taktzeit $t_1$ gleich 10 Minuten für die Forwärtsförderrung des Abfallgemisches, mit einer zweiten Taktzeit $t_2$ gleich 0,5 Minuten für die Rückförderung des letzteren und mit einem Zeitintervall $t_s$ gleich 5 Minuten für den Stillstand zwischen den beiden Förderbewegungen reguliert, ist in der Zeichnung nicht dargestellt. Der Rückwärtslauf der Förderschnecken 2 ist zur Verhinderung des Klebens des behandelten Materials an den Innenflächen des Aufnahmebehälters 1 erforderlich. Es kann dadurch der Bildung von toten Zonen entgegengewirkt und damit das gesamte Abfallgemisch restlos dem Verrottungsvorgang zugeführt werden.

Die Erfindung ermöglicht die Beseitigung von Abfällen aller Art wie von Stadt und Landwirtschaftsabfällen, Klärschlamm, Jauche, Tierkadavern usw. und deren Verwertung in Form von pasteurisiertem Substrat mit Hilfe eines steuerbaren und mechanisiert durchführbaren, biologischen Rotteprozesses mit einer Gesamtdauer ca. von 72 Stunden, wobei durch die auftretende Prozesstemperatur von über 80 Grad Celsius die Entkeimung des Endproduktes ohne Fremdwärme erfolgt.

Die sogenannte Kadaversuppe, die dem Abfallgemisch beigegeben wird, ist eine aus Tierkadavern hergestellte Fleischsuppe, deren Fettgehalt entfernt wird. Dies ist erforderlich, weil das Fett die Kapillarwege im Abfallgemisch verschliesst und damit die Luftzufuhr zum Rotteprozess hemmt.

Ein allenfalls zum Stillstand neigender Verrottungsvorgang, der sich durch rasche Abkühlung des behandelten Abfallgemisches infolge sauren Abfallmaterials, ph-Wert-Senkung, manifestiert, lässt sich durch geringe Mengen von Weisskalk oder durch Beimischen einer zusätzlichen Menge von Holzspänen und/oder nicht vorbehandelten Grases und/oder von Strohmist wieder in Gang bringen.

**Ansprüche**

1. Verfahren zur Herstellung pasteurisierten Substrates durch aerobe biologische Verrottung organischer Abfälle, bei dem die letzteren in einen Aufnahmebehälter gegeben, in diesem unter ständiger Umrührung während einer Verweilzeit innig mit Luft vermischt, dadurch einer bakteriellen aeroben Zersetzung zugeführt werden und das aus dem Verrottungsprozess hervorgegangene Produkt dem Aufnahmebehälter entnommen und einer Veredelung unterzogen wird, gekennzeichnet durch die folgenden Behandlungsschritte:

a) nach dem Füllen des Aufnahmebehälters mit einem Gemisch aus verschiedenen, miteinander vermengt zu verrottenden Abfällen fester Konsistenz bis zur Hälfte seines Fassungsvermögens und anschliessender Zugabe flüssiger Substanzen unter gleichzeitiger, natürlicher Luftzufuhr durch dauerndes Umrührendes Abfallgemisches Fortführung der Umrührung während einer ersten Verweilzeit des Abfallgemisches im Aufnahmebehälter von zwei bis drei Stunden,

b) anschliessendes Zudosieren dekantierten Klärschlammes mit einer derjenigen der teilweise bereits vergorenen Abfallgemisches entsprechenden Temperatur und höchstens mit einem Gewicht, das ein Drittel desjenigen des Abfallgemisches nicht übersteigt, unter Beigabe von Weisskalk je nach ph-Wert des letzten im Umfange ca. von 4% des Klärschlammgewichtes und erneuter Fortsetzung der Umrührung während einer weiteren Verweilzeit von 69 bis 70 Stunden.

2. Verfahren nach Patentanspruch 1, gekennzeichnet durch ein Mischungsverhältnis der miteinander vermengt zu verrottenden Abfälle mit einem Anteil an Trockensubstanz von 30 bis 40% und einem Anteil an Nasssubstanz von 60 bis 70%.

3. Verfahren nach Patentanspruch 1 oder 2, dadurch gekennzeichnet,daß die Trockensubstanz biologisch abbaubare, organische Haushalt- und/oder Landwirtschaftsabfälle umfasst, während die Nassstubstanz aus Jauche und/oder einer entfetteten, sogenannten Kadaversuppe besteht.

4. Verfahren nach einem der Ansprüche 1 bis 3, dadurch gekennzeichnet, daß zur Vermehrung der inneren Reibungsflächen des zu behandelnden Abfallgemisches diesem zerkleinertes Material wie Holz und/oder Laub beigegeben wird.

5. Verfahren nach einem der Ansprüche 1 bis 4, gekennzeichnet durch ein Zeitprogramm für die Steuerung des Umrührvorgangs zwecks einer taktweise abwechselnd reversierbaren Förderung und damit intensiver Vermischung des zu behandelnden Abfallgemisches mit unterschiedlichen Fördertaktzeiten (d Index 1, d, Index 2) je für die beiden Förderrichtungen und jeweils mit einem Zeitinterval (d Index s) für Stillstand dazwischen.

6. Verfahren nach Patentanspruch 5, dadurch gekennzeichnet, dass das Zeitprogramm für die vom Eintritt in den Aufnahmebehälter weggerichtete Förderung des Abfallgemisches eine erste Fördertaktzeit ($t_1$) von 10 Minuten, für die Förderung des letzteren in der Gegenrichtung eine zweite Fördertaktzeit, ($t_2$) von einer halben Minute und für den Stillstand zwischen den besagten beiden Förderbewegungen ein Zeitintervall (ts) von fünf Minuten vorsieht, und dass die die Förderung des Abfallgemisches simultan mit dessen eine statische,natürliche Belüftung bewirkender Rührbewegung mit sechs bis acht Umdrehungen pro Minute durchgeführt wird.

7. Verfahren nach einem der Ansprüche 1 bis 6, dadurch gekennzeichnet, daß vor dem Zudosieren der Klärschlamm auf die am Ende des ersten Behandlungsschrittes im Abfallgemisch auftretende Prozesstemperatur von 20 bis 30 Grad Celsius temperiert wird.

8. Verfahren nach einem der Ansprüche 1 bis 7, dadurch gekennzeichnet, daß dem Abfallgemisch anstelle von oder zusätzlich zu Holzspänen nicht vorbehandeltes Gras und/oder Strohmist beigegeben wird.

9. Verfahren nach einem der Ansprüche 1 bis 8, dadurch gekennzeichnet, daß das fertigfermentierte Produkt in einem Zerkleinerungsvorgang zu feinkörnigem, pasteurisiertem Substrat vermahlen wird.

10.Verfahren nach einem der Ansprüche 1 bis 9, dadurch gekennzeichnet, daß das aus dem Rotteprozeß hervorgegangene Produkt einem zweistündigen Trocknungsvorgang unterzogen wird.

11. Anlage zur Herstellung pasteurisierten Substrats durch aerobe biologische Verrottung organischer Abfälle, mit einem Aufnahmebehälter für das zu verrottende Abfallgemisch samt Vorrichtungen zur Zuführung des letzteren und zur Abführung des fertigfermentierten Produktes sowie mit Förderschnecken zur Umrührung des Abfallgemisches, dadurch gekennzeichnet, dass ein Aufnahmebehälter (1) vorgesehen ist, der im Grundriss viereckig ist, im Aufriss die Form eines mit seinem Dachfirst in den Erdboden gesenkten Hauses fünfeckigen Profils mit im Vergleich zu seiner Baulänge (l) grosser Breitenausdehnung (b) aufweist, wobei der Behälterboden aus zwei gleichen, stumpfwinklig gegeneinander geneigten Bodenhälften (1.1, 1.2) mit den Umrissen der Förderschnecken (2) entsprechend geformter Oberfläche ausgebildet ist und dass mindestens je eine Förderschnecke (2) jeweils in Nähe der einen der beiden geneigten Bodenhälten (1.1, 1.2), parallel zu derselben verlaufend, angeordnet ist.

12. Anlage nach Patentanspruch 11, dadurch gekennzeichnet, dass der Steigungswinkel jeder der beiden Bodenhälften (1.1, 1.2) des Aufnahmebehälters (1) gegen die Horizontale 30 Grad beträgt.

13. Anlage nach Patentanspruch 11 oder 12, gekennzeichnet durch einen in zwei Deckelhälften (1.3, 1.4) ausgeführten Behälterdeckel viereckiger Gestalt, wobei die Deckelhälften (1.3, 1.4) aus schwenkbar aneinander angelenkten, ebenfalls rechteckigen Deckelelementen (1.3.1, 1.4.1) zusammengesetzt und bei aufgesetzten Behälterdeckel die beiden jeweils benachbarten, innersten Deckelelemente (1.3.1, 1.4.1) zur Bildung einer Eintrittsöffnung (1.5) für das zugeführte, zu verrottende Abfallgemisch (A) aufklappbar sind sowie mindestens durch eine je in der einen der fünfeckigen beiden Wände des Aufnahmebehälters (1), nämlich der Stirn-und der Rückwand (1.6 und 1.7), zwecks Wartung und Reinigung vorgesehene Tür (1.6.1, 1.7.1).

14. Anlage nach einem der Ansprüche 11 bis 13, gekennzeichnet durch je ein Paar parallel zueinander gerichteter Förderschnecken (2), die jeweils in Nähe der einen der beiden geneigten Bodenhälften (1.1, 1.2) des Aufnahmebehälters (1), parallel zu derselben verlaufend, angeordnet sind.

15. Anlage nach einem der Ansprüche 11 bis 14, dadurch gekennzeichnet, daß die Lagerung (2.1) einer jeden Förderschnecke (2) an der zugeordneten Bodenhälfte (1.1, 1.2) des Aufnahmebehälters (1) jeweils an den beiden Schneckenenden vorgesehen ist, und dass je ein reversierbarer Elektroantrieb (3), der jeweils mit dem oberen Ende der zugehörigen Förderschnecke (2) gekoppelt ist, an der Aussenfläche einer der beiden Schmalseiten (1.8, 1.9) des Aufnahmebehälters (1) angeordnet ist.

16. Anlage nach einem der Ansprüche 11 bis 15, dadurch gekennzeichnet, daß die Förderschnecken (2) bei einer Baulänge von 4,5 m einen Kerndurchmesser von 60 bis 80 mm aufweisen, wobei der Schneckenkern (2.2) eine Hohlwelle ist.

17. Anlage nach einem der Ansprüche 11 bis 16, gekennzeichnet durch die Ausbildung der Förderschnecken (2), so daß deren Fördersinn auf 85% ihrer Baulänge jeweils vom unteren zum oberen Schneckenende hin und auf ihrer restlichen Baulänge umgekehrt gerichtet ist.

18. Anlage nach Patentanspruch 17, gekennzeichnet durch zwei Austragschnecken (5), die zur Entnahme des fertigfermentierten Substrates je an der einen der beiden geneigten Bodenhälften (1.1, 1.2) des Aufnahmebehälters (1) symmetrisch zwischen den daran angeordneten jeweils zwei Förderschnecken (2) vorgesehen sind, wobei sich deren Baulänge jeweils von einem Auslauf (7) im oberen Endbereich derselben bis zur Höhe der Stossstelle der beiden Abschnitte der benachbarten beiden Förderschnecken (2) mit einander entgegengerichtetem Fördersinn und einem Längenverhältnis zueinander wie 85% zu 15% von deren Baulänge erstreckt.

19. Anlage nach Patentanspruch 18, dadurch gekennzeichnet, dass das obere Ende jeder der beiden Austragschnecken (5) jeweils durch die zugehörige Schmalseite (1.8, 1.9) des Aufnahmebehälters (1) geführt und je mit einem an der Aussenfläche der letzteren befestigten Elektroantrieb (6) gekoppelt ist, und dass die beiden Austragschnecken (5) einen vom unteren zum oberen Schneckenende hin gerichteten Fördersinn aufweisen.

20. Anlage nach einem der Ansprüche 11 bis 19, dadurch gekennzeichnet, daß zwischen den unteren Enden der beiden Paare von Förderschnecken (2) im Eckbereich der beiden geneigten Bodenhälften (1.1, 1.2) ds Aufnahmebehälters (1) eine Scheidewand (4) mit Dreieckquerschnitt angeordnet ist, deren Höhe kleiner als der auf diese projizierte Schneckendurchmesser ist.

21. Anlage nach Patentanspruch 20, gekennzeichnet durch mindestens eine Eintrittsöffnung (4.1) für die Luft in oder im Bereiche der Scheidewand (4).

Schnitt I - I

FIG.1

EP 0 429 744 A2

Schnitt II – II

FIG. 2

EP 0 429 744 A2